# EUROPÄISCHE PATENTSCHRIFT

(11) **EP 2 722 203 B1**
(45) Veröffentlichungstag und Bekanntmachung des Hinweises auf die Patenterteilung: **26.06.2019**
(21) Anmeldenummer: 13188444.7
(22) Anmeldetag: 14.10.2013
(51) Int. Cl.: B60D 1/64

(54) **Rangierantrieb mit Sensor für Deichselstecker**
Manoeuvring drive with sensor for drawbar connector
Entraînement de rangement avec détecteur pour connecteur de timon

(30) Priorität: 22.10.2012 DE 202012010077 U
(43) Veröffentlichungstag der Anmeldung: 23.04.2014
(73) Patentinhaber: Truma Gerätetechnik GmbH & Co. KG, 85640 Putzbrunn (DE)
(72) Erfinder: Aemisegger, Steve, 81547 München (DE); Gumpp, Daniel, 86356 Neusäss (DE); Müller, Jörg, 85658 Egmating (DE); Schmid, Tobias, 85435 Erding (DE); Müssler, Klaus, 85235 Egenburg (DE); Fernandez, Ana María, 81739 München (DE); Schaurer, Oliver, 85445 Oberding (DE); Möhring, Mario, 85408 Gammelsdorf (DE); Venschott, Mathias, 81825 München (DE); Thiel, Stefan, 83022 Rosenheim (DE); Zawadski, Kamil, 85540 Haar (DE); Müller, Jochen, 85665 Moosach (DE)
(74) Vertreter: Prinz & Partner mbB

(56) Entgegenhaltungen:
- EP-A1- 1 580 043
- WO-A1-02/12004
- DE-U1-202009 005 185
- DE-U1-202010 003 612

## Beschreibung

Die Erfindung betrifft einen Rangierantrieb für einen Anhänger.

Bei diesem Anhänger kann es sich beispielsweise um einen Wohnwagen, einen Bootsanhänger, einen Pferdeanhänger, einen Marktanhänger oder Ähnliches handeln. Dieser wird üblicherweise von einer Zugmaschine gezogen. Für einen Wohnwagen dient meist ein Pkw als Zugmaschine. Um den Anhänger in seine endgültige Position zu bringen, beispielsweise auf einem Campingplatz, wird er üblicherweise von der Zugmaschine abgekoppelt und von Hand in die endgültige Position geschoben. Dies ist oft aber mit größeren Anstrengungen verbunden, da mit steigenden Anforderungen an den Komfort solcher Wohnwagen auch deren Gewicht steigt.

Um das Rangieren zu erleichtern, können Anhänger mit Rangierantrieben ausgestattet werden. Bei einem Rangierantrieb handelt es sich um einen Hilfsantrieb, der meist für jedes Rad des Anhängers eine Antriebseinheit mit einem Elektromotor aufweist. Die Elektromotoren werden von einer Batterie im Anhänger mit elektrischer Energie versorgt und können mit den Rädern des Anhängers gekoppelt werden, um diese anzutreiben und damit den Anhänger zu rangieren.

Bei einem solchen Rangierantrieb sind verschiedene Sicherheitsmechanismen vorgesehen, mit denen verhindert werden soll, dass der Rangierantrieb unbeabsichtigt oder durch eine Fehlbedienung aktiviert wird. Ein Sicherheitsmechanismus verwendet den Deichselstecker des Anhängers.

Der Deichselstecker dient dazu, die Beleuchtung des Anhängers mit den entsprechenden Stromkreisen der Zugmaschine zu verbinden, so dass beispielsweise Rückleuchten, Kennzeichenbeleuchtung und Bremslichter synchron mit denjenigen der Zugmaschine ein- und ausgeschaltet werden. Hierzu wird der Deichselstecker in eine Zugmaschinendose eingesteckt. Um zu verhindern, dass der Rangierantrieb aktiviert wird, solange der Anhänger mit der Zugmaschine gekoppelt ist, ist an dem Anhänger eine Deichseldose für den Deichselstecker vorgesehen. Erst wenn der Deichselstecker in die Deichseldose des Anhängers eingesteckt ist (und damit sichergestellt ist, dass er von der Zugmaschine gelöst ist), kann der Rangierantrieb aktiviert werden.

Die Erkennung, ob der Deichselstecker in die Deichseldose eingesteckt ist, erfolgt dabei über Steckerkontakte, die einem Beleuchtungskreis des Anhängers zugeordnet sind. Wenn jedoch der entsprechende Beleuchtungskreis ausgefallen ist, beispielsweise weil die Glühbirne oder eine Sicherung im Beleuchtungskreis defekt ist, kann nicht erfasst werden, ob der Deichselstecker sich in der Deichseldose befindet. Dann kann der Rangierantrieb nicht aktiviert werden, obwohl der Anhänger von der Zugmaschine abgekoppelt und der Deichselstecker in die Deichseldose eingesteckt wurde. Dokument DE 20 2009 005 185 U1 zeigt einen Anhänger mit einem Rangierantrieb, der durch eine Steuerung angesteuert wird. Die Ansteuerung geschieht in Abhängigkeit vom Zustand einer Betriebsmittelverbindung zwischen Zugfahrzeug und Anhänger, die durch eine Sensorik erkannt wird. Der Rangierantrieb kann nur aktiviert werden, wenn die Sensorik eine Trennung der Betriebsmittelverbindung erkannt hat.

Die Aufgabe der Erfindung besteht darin, das Trennen des Deichselsteckers von der Zugmaschine zuverlässiger erfassen zu können.

Zur Lösung dieser Aufgabe ist erfindungsgemäß ein Rangierantrieb gemäß Anspruch 1 vorgesehen. Die Erfindung beruht auf dem Grundgedanken, mittels des Sensors direkt und unmittelbar zu erfassen, ob sich der Deichselstecker in der Deichseldose befindet. Anders als bei der indirekten Erkennung im Stand der Technik, die einen beim Einstecken des Deichselsteckers geschlossenen Stromkreis erkennt, wird die Zuverlässigkeit, mit welcher die Anwesenheit des Deichselsteckers in der Deichseldose erkannt wird, nicht von eventuellen Kontaktschwierigkeiten oder Unterbrechungen von Stromkreisen beeinflusst, die über den Deichselstecker laufen.

Vorzugsweise ist vorgesehen, dass der Sensor als mechanischer Schalter ausgeführt ist. Auf diese Weise lässt sich mit geringen Kosten sehr zuverlässig erkennen, ob der Deichselstecker in die Deichseldose eingesteckt ist.

Vorzugsweise ist der Schalter ein Mikroschalter. Dieser kann platzsparend in die Deichseldose integriert werden.

Die Erfindung wird nachfolgend anhand einer Ausführungsform beschrieben, die in den beigefügten Zeichnungen dargestellt ist. In diesen zeigen:
- Figur 1 in einer schematischen Seitenansicht einen Anhänger mit Rangierantrieb;
- Figur 2 in einer schematischen Draufsicht den Anhänger von Figur 1; und

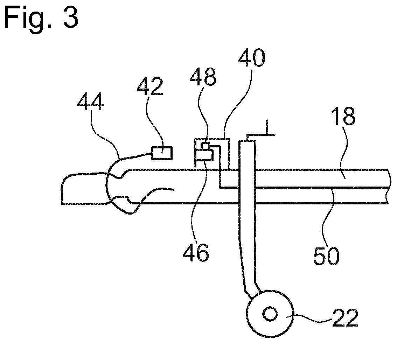

- Figur 3 schematisch in vergrößertem Maßstab den Ausschnitt III von Figur 1.

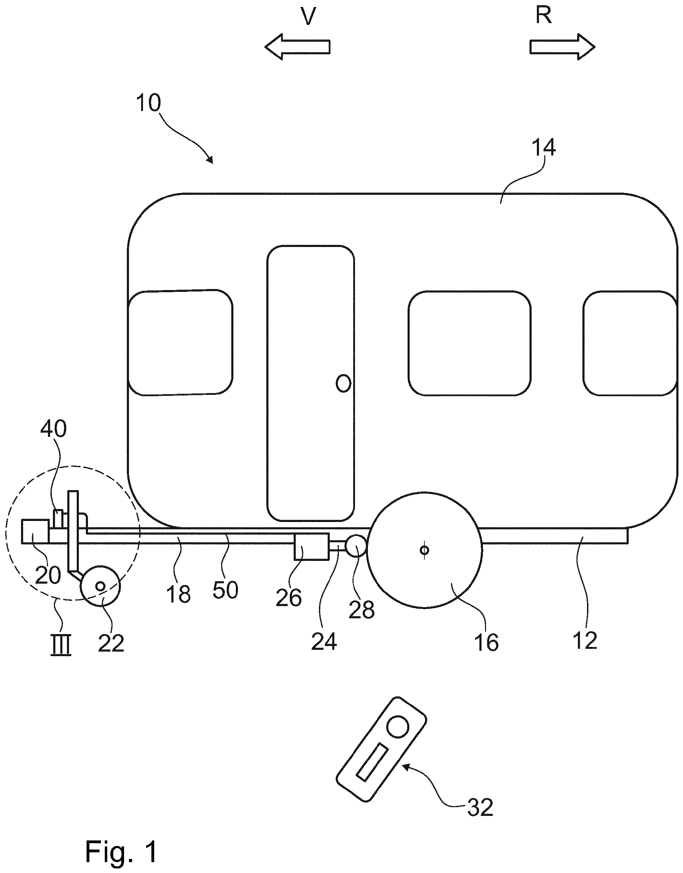

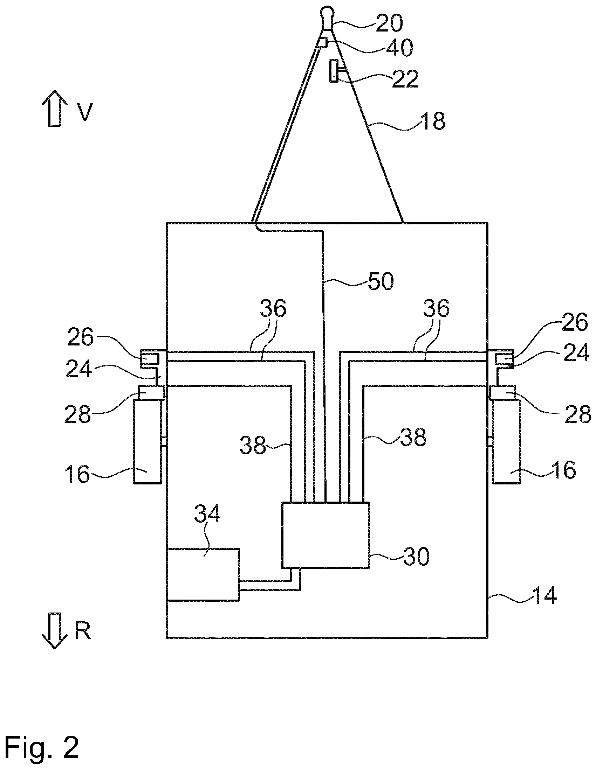

In den Figuren 1 und 2 ist schematisch ein Anhänger 10 (hier ein Wohnwagen) gezeigt, der einen Rahmen 12 aufweist, an dem ein Aufbau 14 angebracht ist. Weiterhin sind zwei Räder 16, eine Deichsel 18 und eine Kupplung 20 vorgesehen. Mit der Kupplung 20 kann der Anhänger 10 an eine Zugmaschine angekoppelt werden. An der Deichsel 18 ist ein Hilfsrad 22 angebracht, welches im abgekoppelten Zustand zum Abstützen des Anhängers 10 dient.

Jedem Rad 16 des Anhängers 10 ist eine Antriebseinheit 24 zugeordnet. Jede Antriebseinheit 24 weist einen Antriebsmotor 26 auf, der üblicherweise als Elektromotor ausgeführt ist, sowie eine Antriebsrolle 28, die vom Antriebsmotor 26 angetrieben werden kann. Die Antriebsrolle 28 kann mit dem zugeordneten Rad 16 des Anhängers 10 in Eingriff gebracht werden.

Weiterhin ist eine Zentraleinheit 30 vorgesehen, die als zentrale Steuerung für die Antriebseinheiten 24 dient und auch für die Kommunikation mit einem Bediener zuständig ist. Dieser kann beispielsweise über eine schematisch in Figur 1 gezeigte Fernbedienung 32 beispielsweise eine Geradeausfahrt oder eine Kurvenfahrt vorgeben.

Im Anhänger 10 ist außerdem eine Spannungsquelle 34 vorgesehen, mittels der die Zentraleinheit 30 und die Antriebseinheiten 24 mit elektrischer Energie versorgt werden können. Die Spannungsquelle kann ein Netzteil sein, das an eine externe Steckdose angeschlossen ist, oder ein Energiespeicher, der sich an Bord des Anhängers befindet. In diesem Fall handelt es sich beim Energiespeicher 34 üblicherweise um einen Akkumulator, umgangssprachlich oft auch als Batterie bezeichnet. Die Antriebsmotoren 26 sind dabei über Anschlussleitungen 36 mit der Zentraleinheit verbunden. Ferner ist für jede Antriebseinheit mindestens eine Steuerleitung 38 vorgesehen, die sich von der Zentraleinheit 30 zu jeder Antriebseinheit 24 erstreckt.

Die Antriebseinheiten 24 zusammen mit der Zentraleinheit 30 bilden einen Rangierantrieb, mit dem der Anhänger 10 verfahren werden kann. Zu diesem Zweck werden die Antriebsrollen 28 in Eingriff mit den Rädern 16 des Anhängers gebracht, sodass sie, wenn sich die Antriebsmotoren 26 drehen, die Räder 16 antreiben. Dies ist grundsätzlich aus dem Stand der Technik bekannt.

Als Ausführungsbeispiel ist hier ein einachsiger Anhänger gezeigt. Dementsprechend weist der Anhänger 10 zwei Räder 16 auf, denen jeweils eine Antriebseinheit 24 zugeordnet ist. Grundsätzlich kann derselbe Rangierantrieb auch bei einem zweiachsigen Anhänger eingesetzt werden. Dabei können weiterhin insgesamt lediglich zwei Antriebseinheiten verwendet werden, sodass auf jeder Seite des Anhängers ein angetriebenes und ein nicht angetriebenes Rad vorhanden ist, oder es können auf jeder Seite des Anhängers zwei Antriebseinheiten eingesetzt werden, sodass jedes Rad des Anhängers angetrieben werden kann.

An der Deichsel 18 ist eine Deichseldose 40 angebracht, in die ein Deichselstecker 42 eingesteckt werden kann. Dieser ist an einem Kabel 44 angebracht, das Teil der Beleuchtungskreise des Anhängers 10 ist. Die Deichseldose 40 weist eine Aufnahme 46 auf, in die der Deichselstecker 42 eingesteckt werden kann. Der Aufnahme 46 ist ein Sensor 48 in der Form eines Mikroschalters zugeordnet, der betätigt wird, wenn der Deichselstecker 42 in die Aufnahme 46 der Deichseldose 48 eingesteckt wird.

Der Sensor 48 ist über eine Freigabeleitung 50 mit der Zentraleinheit 30 verbunden. Diese kann dadurch abfragen, ob sich der Deichselstecker 42 in der Deichseldose 40 befindet. Nur wenn dies der Fall ist, können die Antriebseinheiten 24 von der Zentraleinheit 30 angesteuert werden. Dies gewährleistet, dass die Antriebseinheiten 24 nicht aktiviert werden können, solange der Deichselstecker 42 mit einer Zugmaschine verbunden ist.

## Patentansprüche

1. Rangierantrieb (24, 30) für einen Anhänger (10), mit einer Zentraleinheit (30) und mehreren Antriebseinheiten (24), die Rädern (16) des Anhängers (10) zuordenbar sind, wobei die Zentraleinheit (30) einen Eingang für eine Freigabeleitung (50) aufweist, **dadurch gekennzeichnet, dass** der Rangierantrieb (24, 30) eine Deichseldose (40) für einen Deichselstecker (42) des Anhängers (10) aufweist, wobei die Deichseldose (40) einen Sensor (48) aufweist, mit dem detektiert werden kann, ob der Deichselstecker (42) des Anhängers (10) in die Deichseldose (40) eingesteckt ist, wobei der Sensor (48) mit der Freigabeleitung (50) verbunden ist, wobei die Zentraleinheit (30) ausgebildet ist, um über die Freigabeleitung (50) abzufragen, ob sich der Deichselstecker (42) in der Deichseldose (40) befindet, und die Antriebseinheiten (24) von der Zentraleinheit (30) nur angesteuert werden können, wenn dies der Fall ist.

2. Rangierantrieb nach Anspruch 1, **dadurch gekennzeichnet, dass** der Sensor (48) als mechanischer Schalter ausgeführt ist.

3. Rangierantrieb nach Anspruch 2, **dadurch gekennzeichnet, dass** der Schalter ein Mikroschalter (48) ist.

## Claims

1. A maneuvering drive (24, 30) for a trailer (10), comprising a central unit (30) and a plurality of drive units (24) which are adapted to be associated with wheels (16) of the trailer (10), the central unit (30) having an input for an enable line (50), **characterized in that** the maneuvering drive (24, 30) includes a drawbar socket (40) for a drawbar plug (42) of the trailer (10), the drawbar socket (40) including a sensor (48) by which it can be detected whether the drawbar plug (42) of the trailer (10) is plugged into the drawbar socket (40), the sensor (48) being connected to the enable line (50), wherein the central unit (30) is configured to inquire, via the enable line (50), whether the drawbar plug (42) is located in the drawbar socket (40), and the drive units (24) can only be controlled by the central unit (30) when this is the case.

2. The maneuvering drive according to claim 1, **characterized in that** the sensor (48) is configured as a mechanical switch.

3. The maneuvering drive according to claim 2, **characterized in that** the switch is a microswitch (48).

## Revendications

1. Entraînement de manoeuvre (24, 30) pour remorque (10), comportant une unité centrale (30) et plusieurs unités d'entraînement (24) qui sont aptes à être associées à des roues (16) de la remorque (10), l'unité centrale (30) présentant une entrée pour une ligne de validation (50), **caractérisé en ce que** l'entraînement de manoeuvre (24, 30) présente une prise de timon (40) pour une fiche de timon (42) de la remorque (10), la prise de timon (40) présentant un capteur (48) au moyen duquel il est possible de détecter si la fiche de timon (42) de la remorque (10) est enfichée dans la prise de timon (40), le capteur (48) étant relié à la ligne de validation (50), l'unité centrale (30) étant réalisée de manière à interroger, par l'intermédiaire de la ligne de validation (50), si la fiche de timon (42) se trouve dans la prise de timon (40), et les unités d'entraînement (24) étant aptes à être commandées par l'unité centrale (30) uniquement si cela est le cas.

2. Entraînement de manoeuvre selon la revendication 1, **caractérisé en ce que** le capteur (48) est réalisé sous forme de commutateur mécanique.

3. Entraînement de manoeuvre selon la revendication 2, **caractérisé en ce que** le commutateur est un commutateur miniature (48).
